# FASCICULE DE BREVET EUROPEEN

(11) **EP 1 231 855 B1**
(45) Date de publication et mention de la délivrance du brevet: **17.09.2003**
(21) Numéro de dépôt: 01976402.6
(22) Date de dépôt: 11.10.2001
(51) Int. Cl.: A47J 43/07

(54) **SOCLE DE RANGEMENT D'ACCESSOIRES POUR UN APPAREIL ELECTROMENAGER DE PREPARATION CULINAIRE**
AUFNAHMEVORRICHTUNG FÜR DAS ZUBEHÖR VON HAUSHALTSGERÄTEN
BASE FOR STORING AN ELECTRICAL FOOD PROCESSOR ACCESSORIES

(30) Priorité: 27.10.2000 FR 0013787
(43) Date de publication de la demande: 21.08.2002
(73) Titulaire: SEB S.A., 69130 Ecully (FR)
(72) Inventeur: ASTEGNO, Jean-Paul, F-64420 Espoey (FR); PEYRAS, Lionel, F-65100 Jarret (FR)
(74) Mandataire: Kiehl, Hubert
(86) Numéro de dépôt international: FR0103148
(87) Numéro de publication internationale: WO02034097

(56) Documents cités:
- WO-A-01/30222
- US-A- 4 334 724
- US-A- 4 456 185
- US-A- 4 733 827

## Description

La présente invention concerne le domaine technique général des appareils électroménagers de préparation culinaire et se rapporte plus particulièrement au rangement des accessoires de ces appareils.

Il est connu de réaliser des boîtes de rangement pour accessoires d'appareil électroménager de préparation culinaire, comportant un boîtier fermé par un couvercle. Toutefois lorsque la surface du couvercle est suffisante pour servir de support à l'appareil correspondant, la rigidité du couvercle est alors insuffisante pour permettre valablement une telle utilisation.

Le document FR 1 323 603 divulgue une boîte de rangement pour des accessoires de travail d'un appareil électroménager de préparation culinaire. La boîte comporte un couvercle articulé sur une base. Le couvercle présente une face supérieure prévue pour recevoir un appareil électroménager de préparation culinaire. Lors de l'utilisation de l'appareil, le couvercle prend appui sur les bords supérieurs de la base. Ces dispositions nécessitent une construction relativement rigide pour pouvoir supporter l'appareil.

L'objet de la présente invention est de proposer un rangement pour les accessoires de travail rotatifs d'un appareil électroménager de préparation culinaire, pouvant servir de socle audit appareil, et dont la réalisation soit économique.

Un autre objet de la présente invention est de proposer un rangement pour les accessoires de travail rotatifs d'un appareil électroménager de préparation culinaire, dont la sensibilité aux vibrations soit réduite.

Ces objets sont atteints avec une boîte de rangement pour des accessoires de travail d'un appareil électroménager de préparation culinaire, comportant une base comprenant une face inférieure de repos et un couvercle comprenant une face supérieure prévue pour recevoir un appareil électroménager de préparation culinaire, du fait qu'une face intérieure de la base, respectivement une face intérieure du couvercle, comporte au moins une conformation sur laquelle sont ménagés des moyens d'appui non périphériques prévus pour coopérer avec une face intérieure du couvercle ou avec des moyens d'appui non périphériques ménagés en correspondance sur une conformation de la face intérieure du couvercle, respectivement avec une face intérieure de la base, lorsque le couvercle ferme la base. Le contact entre les moyens d'appui non périphériques et la face intérieure disposée en vis à vis peut être obtenu dès la fermeture de la boîte de rangement, ou en présence de l'appareil disposé sur la face supérieure du couvercle. Grâce aux moyens d'appui non périphériques, disposés en dehors de la périphérie du couvercle et de la base, la flexion du couvercle peut être limitée lorsqu'un appareil électroménager de préparation culinaire est disposé sur ladite boîte. De ce fait, les épaisseurs du couvercle et de la base peuvent être réduites. Cette disposition permet de réduire les temps de cycle pour le moulage du couvercle et de la base, ainsi que les quantités de matières nécessaires. Par ailleurs, la présence de moyens d'appui non périphériques permet d'utiliser plus facilement des matières plastiques autres que des matières plastiques qualifiées de rigides, telles que l'ABS ou le SAN. L'utilisation de Polypropylène ou de Polyéthylène peut par exemple être envisagée. Les matières moins rigides présentent l'avantage de mieux amortir les vibrations, ce qui permet de limiter le bruit lorsqu'un appareil électroménager de préparation culinaire est utilisé sur la boîte de rangement.

Selon une forme de réalisation, les moyens d'appui non périphériques de la conformation ou de l'une au moins des conformations sont agencés dans une zone comprise entre le centre de la face intérieure et le tiers de la distance au bord latéral de la base ou du couvercle. Un appui dans la zone centrale permet de limiter efficacement la flexion du couvercle. Selon une autre forme de réalisation, trois conformations sont agencées en triangle autour du centre de la face intérieure de la base ou du couvercle, les moyens d'appui non périphériques de deux conformations et le centre présentant un angle compris entre 60 et 150 degrés. Selon une autre forme de réalisation le centre de la face intérieure est disposé entre deux conformations munies de moyens d'appui non périphériques. De tels appuis permettent également de limiter efficacement la flexion du couvercle.

Avantageusement la ou au moins l'une des conformations de la base présente une zone d'appui latérale avec une zone d'appui latérale de la ou de l'une au moins des conformations du couvercle. Cette disposition d'améliorer la liaison entre la base et le couvercle.

Avantageusement alors la ou au moins l'une des dites conformations est flexible transversalement. Cette disposition permet d'obtenir d'immobiliser latéralement le couvercle par rapport à la base, et ainsi de réduire les phénomènes de vibration dans la boîte de rangement générés par l'appareil électroménager disposé sur ladite boîte. Ladite conformation peut notamment être tubulaire.

Avantageusement pour faciliter le rangement des accessoires, la ou l'une au moins des conformations de la base et/ou la ou l'une au moins des conformations du couvercle est prévue pour servir de support à un outil de travail rotatif d'appareil électroménager de préparation culinaire.

Selon une configuration avantageuse la base et le couvercle forment deux demi-coques, cette disposition permettant d'améliorer la rigidité de la boîte de rangement.

Avantageusement encore, le couvercle comporte sur la face supérieure une ouverture permettant l'introduction d'un doigt pour actionner une pièce mobile et/ou élastique du couvercle, respectivement de la base, comportant des moyens d'accrochage prévus pour coopérer avec des moyens de retenue de la base, respectivement du couvercle. Cette disposition permet de solidariser la boîte et le couvercle tout en facilitant le déverrouillage..

Avantageusement alors la face supérieure du couvercle comporte deux ouvertures disposés de part et d'autre du centre du couvercle et deux pièces parallèles en forme de languette, issues de la face intérieure du couvercle, sont disposées entre les ouvertures, les moyens d'accrochage étant ménagés sur les faces des pièces disposées du côté des ouvertures. L'utilisateur peut ainsi introduire le pouce et l'index pour déverrouiller le couvercle de la base.

L'invention sera mieux comprise à l'étude d'un exemple de réalisation, pris à titre nullement limitatif, et illustré dans les figures annexées, dans lesquelles :
- la figure 1 est une vue schématique d'un socle formant une boîte de rangement selon l'invention, comportant une base et un couvercle,
- les figures 2 et 3 sont des vues montrant respectivement les faces supérieure et inférieure du couvercle illustré à la figure 1.
- les figures 4 et 5 sont des vues montrant, respectivement sans accessoires et avec accessoires, la face supérieure de la base illustrée à la figure 1, et la figure 6 est une vue montrant la face inférieure de ladite base.

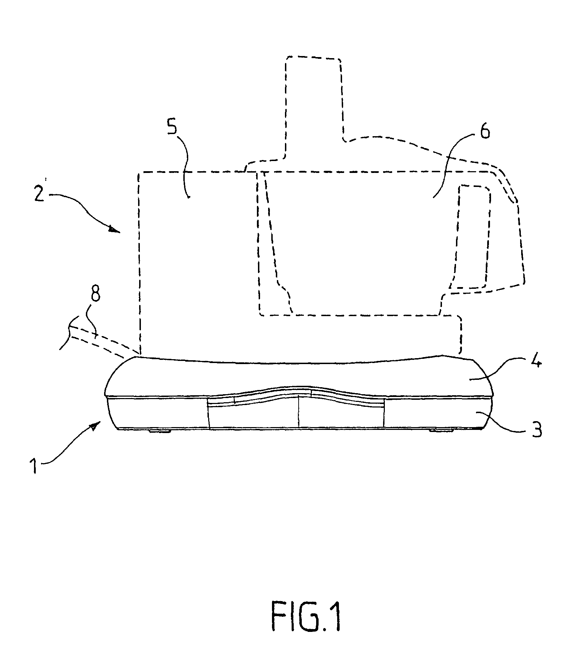

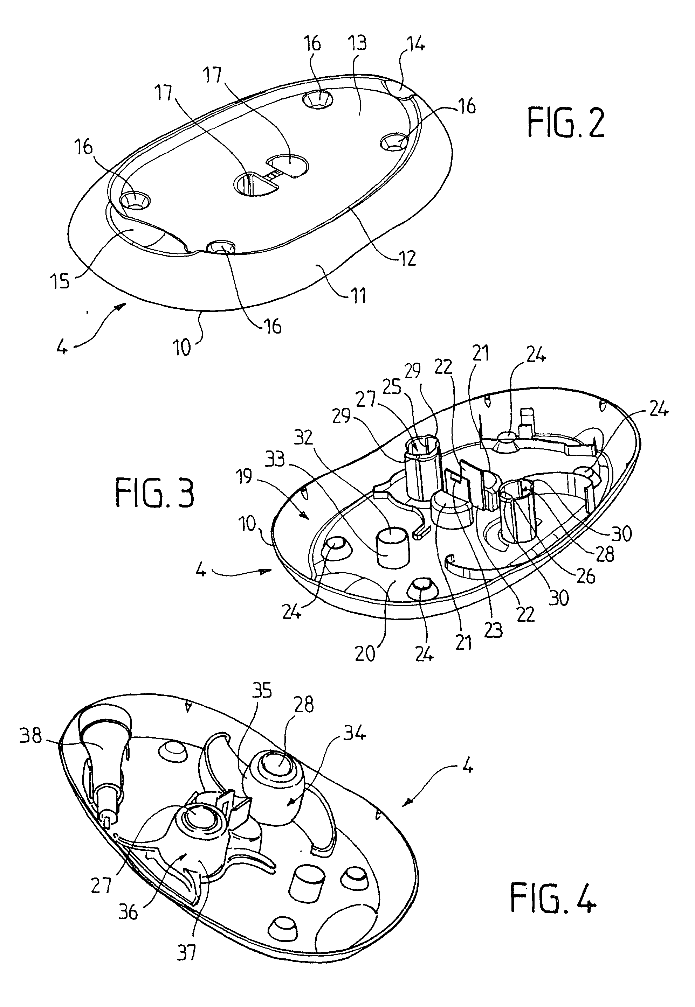

La figure 1 présente un exemple de réalisation d'une boîte 1 de rangement d'accessoires formant un socle prévu pour être disposé sous un appareil électroménager de préparation culinaire 2. La boîte 1 de rangement comprend une base 3 fermée par un couvercle 4. L'appareil 2 comporte un boîtier moteur 5 et un récipient de travail 6 ainsi que des outils de travail rotatifs montés sur un moyeu amovible, visibles à la figure 4. Le récipient 6 est disposé sur le boîtier moteur 5 alimenté par un cordon électrique 8. Un tel appareil comporte un entraînement en partie inférieure du récipient 6, connu en soi et non représenté aux figures. Toutefois un appareil comportant un entraînement en partie supérieure du récipient peut également être utilisé sur la boîte 1 de rangement.

Le couvercle 4 représenté aux figures 2 et 3 comporte un bord périphérique inférieur 10 raccordé par une paroi latérale 11 à un rebord périphérique supérieur 12 entourant une face supérieure 13. Le couvercle 4 présente une forme allongée selon une direction longitudinale. Une encoche 14 ménagée dans le rebord supérieur 12 est prévue pour le passage du cordon électrique de l'appareil (représenté à la figure 1). Une autre encoche 15 ménagée dans le rebord supérieur 12 dans la moitié opposée du couvercle 4 est prévue pour le passage des doigts sous le boîtier de l'appareil, afin de faciliter le retrait de l'appareil du socle. Des dépressions 16 ménagées sur la face supérieure 13 forment des moyens de retenue prévus pour recevoir les moyens d'appui disposés sous l'appareil. A titre de variante, une seule dépression, par exemple non circulaire, pourrait être envisagée sur la face supérieure du socle, ou encore une ou plusieurs nervures prévues pour coopérer avec une face latérale de l'appareil de préparation culinaire ou avec une conformation de la face inférieure dudit appareil. Deux ouvertures 17 prévues pour le passage d'un doigt sont avantageusement ménagées sur la face 13, sensiblement au milieu de ladite face.

Tel que mieux visible à la figure 3, le couvercle 4 comporte une face intérieure 19 présentant un fond 20 duquel s'élèvent deux plots 21 correspondant aux ouvertures 17 visibles à la figure 2. Deux pièces élastiques 22 en forme de languette sont disposées face à face entre les plots 21. Les extrémités supérieures des faces extérieures des pièces 22 comportent des moyens de retenue 23 tels que des crochets. Les faces latérales des plots adjacentes aux pièces 22 sont évidées de manière à permettre un actionnement des faces extérieures des pièces 22 en forme de languette par les ouvertures 17. Si désiré, les pièces 22 peuvent être associées à une lamelle métallique pour obtenir une meilleure élasticité. A titre de variante, les pièces 22 peuvent être des pièces mobiles associées à un moyen de rappel élastique. A titre de variante également, une seule pièce mobile ou flexible pourrait être envisagée.

Le fond 20 comporte des bossages 24 correspondant aux dépressions 16 de la face supérieure. Deux conformations 27, 28 sont disposées sur la face intérieure 19 de part et d'autre des plots 21 sensiblement selon une direction perpendiculaire à la direction longitudinale. Les conformations 27, 28 sont tubulaires et présentent des décrochements 29, 30 permettant de leur conférer une légère flexibilité transversale. Une autre conformation 33 est formé par un plot disposé selon la direction longitudinale.

Tel que montré à la figure 4, deux outils rotatifs 34, 36 comportant chacun une couronne axiale 35, 37 peuvent être logés respectivement autour des conformations 27 et 28. Les outils 34, 36 sont prévus pour être montés sur un moyeu amovible 38.

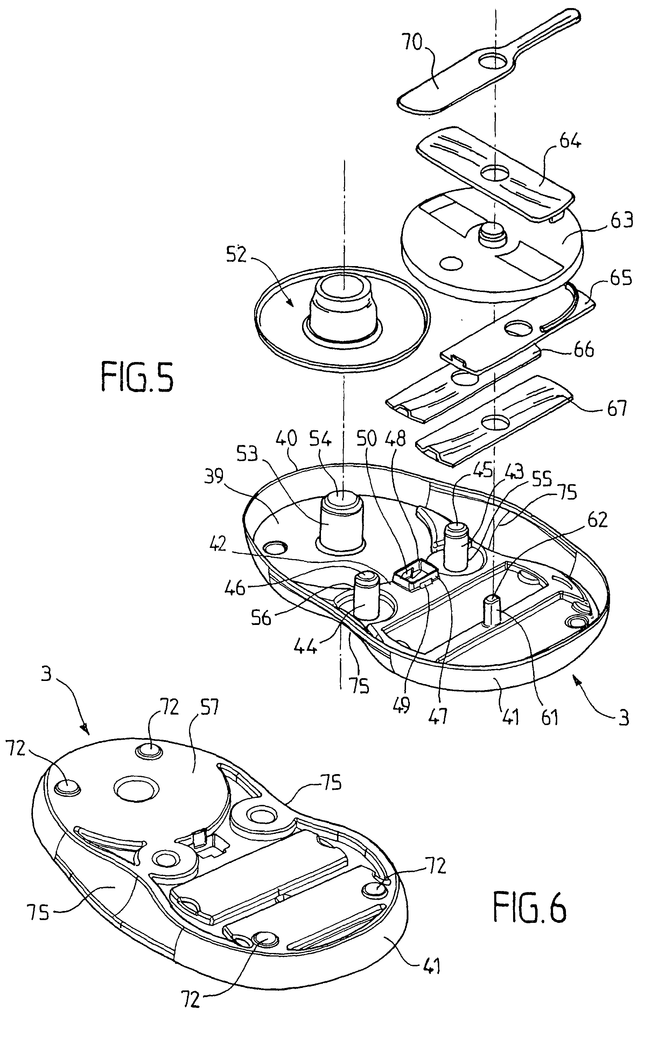

La base 3 représentée aux figures 5 et 6 comporte un bord périphérique supérieur 40 ajusté avec le bord 10 du couvercle 4. Le bord 40 est relié par une paroi latérale 41 à un fond 42. La base 3 est allongée par rapport à une direction principale. La base 3 comporte par rapport à cette direction principale des faces latérales présentant dans leur partie médiane un renfoncement 75. La base 3 comporte ainsi deux renfoncements 75 diamétralement opposés, formant des moyens de préhension permettant de soulever le socle. A titre de variante, d'autres moyens de préhension peuvent être envisagés.

Deux conformations 43, 44 sont ménagés sur une face intérieure 39 de la base 3. Les conformations 43, 44 sont constitués par des plots s'étendant verticalement depuis le fond 42. Les conformations 43, 44 sont disposées de part et d'autre de nervures 47, 48 disposées de manière centrale sur la face 39. Les conformations 43, 44 sont disposées sensiblement à mi-distance entre le bord 10 et le centre de la face 39. La base comporte des moyens de retenue 49, 50 prévus pour coopérer avec les moyens d'accrochage 23 des pièces 22, tels que des découpes ménagées sur les nervures 47, 48. Deux autres conformations 53, 61 sont disposées selon la direction longitudinale sensiblement à mi-distance entre le bord 10 et le centre de la face 39, de part et d'autre dudit centre. Les conformations 53, 61 sont prévues respectivement pour recevoir un outil rotatif 52 et un outil rotatif 63 servant de support à des cartouches 64, 65, 66, 67.

La boîte de rangement 1 peut être définie par une longueur maximale selon une direction dite principale, par une largeur maximale dans la direction perpendiculaire à ladite longueur, et par une hauteur. La hauteur de la boîte 1 est inférieure au tiers de la longueur maximale, et tel qu'illustré aux figures 1 à 6, est de l'ordre du quart de ladite longueur. Le bord périphérique 10 du couvercle 4 et le bord périphérique 40 de la base 3 forment des moyens d'appui périphériques.

La base 3 présente une face inférieure de repos 57. Dans l'exemple illustré à la figure 10, la face inférieure de repos 57 comporte quatre pieds d'appui 72. Les faces supérieures des conformations 61, 53 de la base 3 disposées en deçà de la périphérie de la base forment des moyens d'appui non périphériques 62, 54, prévus pour coopérer respectivement avec le fond 20 du couvercle 4 et avec la face supérieure de la conformation 33 du couvercle 4. La face supérieure de la conformation 33 du couvercle 4 forme également un moyen d'appui non périphérique 32 lorsque le couvercle 4 ferme la base 3.

Les conformations 43, 44 de la base 3 s'engagent dans les conformations tubulaires 27, 28 du couvercle 4. La paroi latérale de la conformation 43, respectivement de la conformation 44, forme une zone d'appui latérale 55, respectivement une zone d'appui latérale 56, avec la paroi interne de la conformation tubulaire 27, respectivement de la conformation tubulaire 28 formant également une zone d'appui latérale 25, respectivement une zone d'appui latérale 26. De préférence, les conformations 27, 28 sont flexibles transversalement de manière à exercer un léger serrage des conformations 43, 44, améliorant ainsi l'immobilisation transversale du couvercle 4 sur la base 3.

La face supérieure de chacune des conformations 43, 44 de la base 3 peut également former un moyen d'appui non périphérique 45, 46 avec le couvercle, et la face supérieure de chacune des conformations 27, 28 du couvercle 4 peut également former un moyen d'appui non périphérique avec la base 3.

A titre de variante le contact entre au moins l'une des conformations de la base, respectivement du couvercle, et la face intérieure ou la conformation associée du couvercle, respectivement de la base, peut intervenir seulement lorsque l'appareil de préparation culinaire 2 est disposé sur la boîte 1 de rangement.

A titre de variante, la ou les pièces 22 de verrouillage peuvent être solidaires de la base, les moyens de retenue étant alors disposés dans le couvercle.

A titre de variante, les conformations flexibles 27, 28 pourraient être agencées sur la base ou être réparties entre la base et le couvercle. Une seule conformation flexible, par exemple centrale, peut aussi être envisagée. Le nombre de conformations flexibles n'est pas limité à une ou deux, mais peut être supérieur, par exemple de l'ordre de trois ou quatre.

Une ou plusieurs conformations peuvent être agencées de manière différente sur la face intérieure du couvercle et/ou de la base sans sortir du cadre de l'invention.

A titre d'exemple les moyens d'appui non périphériques d'une ou plusieurs conformations peuvent être agencés dans une zone comprise entre le centre de la face intérieure et le tiers de la distance au bord latéral de la base ou du couvercle.

A titre d'exemple également, trois conformations peuvent être agencées en triangle autour du centre de la face intérieure de la base ou du couvercle, les moyens d'appui non périphériques de deux conformations distinctes et le centre de la base ou du couvercle présentant un angle compris entre 60 et 150 degrés.

De nombreuses améliorations peuvent être apportées à cette boîte de rangement dans le cadre des revendications.

La présente invention trouve une application industrielle pour les boîtes de rangement d'appareils électroménagers de préparation culinaire tels que notamment les robots ménagers multifonctions, les mini-hachoirs, les blenders ou les hachoirs à vis.

## Revendications

1. Boîte de rangement pour des accessoires de travail d'un appareil électroménager de préparation culinaire, comportant une base (3) comprenant une face inférieure de repos (57) et un couvercle (4) comprenant une face supérieure (13) prévue pour recevoir un appareil électroménager de préparation culinaire, **caractérisé en ce qu'**une face intérieure (39) de la base (3), respectivement une face intérieure du couvercle, comporte au moins une conformation (43, 44, 53, 61) sur laquelle sont ménagés des moyens d'appui non périphériques (45, 46, 54, 62) prévus pour coopérer avec une face intérieure (19) du couvercle (4) ou avec des moyens d'appui non périphériques (32) ménagés en correspondance sur une conformation (33) de la face intérieure (19) du couvercle (4), respectivement avec une face intérieure de la base, lorsque le couvercle ferme la base.

2. Boîte de rangement selon la revendication 1, **caractérisé en ce que** les moyens d'appui non périphériques de la conformation ou de l'une au moins des conformations sont agencés dans une zone comprise entre le centre de la face intérieure et le tiers de la distance au bord latéral de la base ou du couvercle.

3. Boîte de rangement selon la revendication 1, **caractérisé en ce que** trois conformations sont agencées en triangle autour du centre de la face intérieure de la base ou du couvercle, les moyens d'appui non périphériques de deux conformations et le centre présentant un angle compris entre 60 et 150 degrés.

4. Boîte de rangement selon la revendication 1, **caractérisé en ce que** le centre de la face intérieure (39) de la base (3) et/ou de la face inférieure du couvercle est disposé entre deux conformations (43, 44 ; 53, 61) conformations munies de moyens d'appui non périphériques (45, 46 ; 54, 62).

5. Boîte de rangement selon l'une des revendications 1 à 4, **caractérisé en ce que** la ou l'une au moins (43, 44) des conformations de la base (3) présente une zone d'appui latérale (55, 56) avec une zone d'appui latérale (25, 26) de la ou de l'une au moins (27, 28) des conformations du couvercle (4).

6. Boîte de rangement selon la revendication 5, **caractérisé en ce que** la ou l'une au moins (27, 28) des dites conformations est flexible transversalement.

7. Boîte de rangement selon l'une des revendications 1 à 6, **caractérisé en ce que** la ou l'une au moins (53, 61) des conformations de la base (3) et/ou la ou l'une au moins des conformations (27, 28) du couvercle (4) est prévue pour servir de support à un outil de travail rotatif (52, 63 ; 34, 36) d'appareil électroménager de préparation culinaire.

8. Boîte de rangement selon l'une des revendications 1 à 7, **caractérisé en ce que** la base (3) et le couvercle (4) forment deux demi-coques.

9. Boîte de rangement selon l'une des revendications 1 à 8, **caractérisé en ce que** le couvercle (4) comporte sur la face supérieure (13) une ouverture (17) permettant l'introduction d'un doigt pour actionner une pièce mobile et/ou élastique (22) du couvercle (4), respectivement de la base, comportant des moyens d'accrochage (23) prévus pour coopérer avec des moyens de retenue (49, 50) de la base (3), respectivement du couvercle.

10. Boîte de rangement selon la revendication 9, **caractérisé en ce que** la face supérieure (13) du couvercle (4) comporte deux ouvertures (17) disposés de part et d'autre du centre du couvercle (4) et que deux pièces (22) parallèles en forme de languette, issues de la face intérieure (19) du couvercle (4), sont disposées entre les ouvertures (17), les moyens d'accrochage (23) étant ménagés sur les faces des pièces (22) disposées du côté des ouvertures (17).

## Patentansprüche

1. Lagerungskasten für Arbeitszubehörteile eines Elektrohaushaltsgeräts zur Nahrungsmittelbereitung mit einer Basis (3), die eine untere Ruhefläche (57) aufweist, und einem Deckel (4), der eine obere Fläche (13) aufweist, die zur Aufnahme eines Elektrohaushaltsgeräts zur Nahrungsmittelbereitung vorgesehen ist, **dadurch gekennzeichnet, daß** eine innere Fläche (39) der Basis (3) bzw. eine innere Fläche des Deckels wenigstens eine Ausbildung (43, 44, 53, 61) aufweist, an welcher nichtperipherische Anlagemitttel (45, 46, 54, 62) vorgesehen sind, die zum Zusammenwirken mit einer inneren Fläche (19) des Deckels (4) oder mit nichtperipherischen Anlagemitteln (32) vorgesehen sind, die entsprechend an einer Ausbildung (33) der inneren Fläche (19) des Deckels (4) bzw. mit einer inneren Fläche der Basis vorgesehen sind, wenn der Deckel die Basis verschließt.

2. Lagerungskasten nach Anspruch 1, **dadurch gekennzeichnet, daß** die nichtperipherischen Anlagemittel der Ausbildung oder wenigstens einer der Ausbildungen in einer Zone angeordnet sind, die zwischen dem Zentrum der inneren Fläche und dem Drittel des Abstands zum seitlichen Rand der Basis oder des Deckels liegt.

3. Lagerungskasten nach Anspruch 1, **dadurch gekennzeichnet, daß** drei Ausbildungen im Dreieck um das Zentrum der inneren Fläche der Basis oder des Deckels angeordnet sind, wobei die nichtperipherischen Anlagemittel von zwei Ausbildungen und das Zentrum einen Winkel zwischen 60 und 150 Grad aufweisen.

4. Lagerungskasten nach Anspruch 1, **dadurch gekennzeichnet, daß** das Zentrum der inneren Fläche (39) der Basis (3) und/oder der unteren Fläche des Deckels zwischen zwei Ausbildungen (43, 44; 53, 61) angeordnet ist, die mit nichtperipherischen Anlagemitteln (45, 46; 54, 62) versehen sind.

5. Lagerungskasten nach einem der Ansprüche 1 bis 4, **dadurch gekennzeichnet, daß** die oder wenigstens eine (43, 44) der Ausbildungen der Basis (3) eine seitliche Anlagezone (55, 56) mit einer seitlichen Anlagezone (25, 26) der oder wenigstens der einen (27, 28) der Ausbildungen des Deckels (4) aufweist.

6. Lagerungskasten nach Anspruch 5, **dadurch gekennzeichnet, daß** die oder wenigstens eine (27, 28) der Ausbildung transversal flexibel ist.

7. Lagerungskasten nach einem der Ansprüche 1 bis 6, **dadurch gekennzeichnet, daß** die oder wenigstens eine (53, 61) der Ausbildungen der Basis (3) und/oder die oder wenigstens eine der Ausbildungen (27, 28) des Deckels (4) dazu vorgesehen ist, als Träger für ein Dreharbeitswerkzeug (52, 63; 34, 36) für ein Elektrohaushaltsgerät zur Kochvorbereitung zu dienen.

8. Lagerungskasten nach einem der Ansprüche 1 bis 7, **dadurch gekennzeichnet, daß** die Basis (3) und der Deckel (4) zwei Halbschalen bilden.

9. Lagerungskasten nach einem der Ansprüche 1 bis 8, **dadurch gekennzeichnet, daß** der Deckel (4) an der oberen Fläche (13) eine Öffnung (17) aufweist, durch die ein Finger eingeführt werden kann, um ein bewegliches und/oder elastisches Teil (22) des Deckels (4) bzw. der Basis zu betätigen, das Einhakmittel (23) aufweist, die zum Zusammenwirken mit Haltemitteln (49, 50) der Basis (3) bzw. des Deckels vorgesehen sind.

10. Lagerungskasten nach Anspruch 9, **dadurch gekennzeichnet, daß** die obere Fläche (13) des Deckels (4) zwei Öffnungen (17) aufweist, die beiderseits des Zentrums des Deckels (4) angeordnet sind, und daß zwei zungenförmige, parallele Teile (22), die aus der inneren Fläche (19) des Deckels (4) herausgeführt sind, zwischen den Öffnungen (17) angeordnet sind, wobei die Einhakmittel (23) an den Flächen der Teile (22) vorgesehen sind, die an der Seite der Öffnungen (17) angeordnet sind.

## Claims

1. A storage box for work accessories for a domestic appliance for preparing food, the storage box comprising a base (3) having a bottom rest face (57), and a cover (4) having a top face (13) provided to receive a domestic appliance for preparing food, the storage box being **characterized in that** an inside face (39) of one of the base (3) and the cover (4), includes at least one shape (43, 44, 53, 61) on which non-peripheral press means (45, 46, 54, 62) are formed that are provided to co-operate, when the base is closed by the cover, with an inside face (19), or with corresponding non-peripheral press means (32) formed on a shape (33) of the inside face (19) of the other one of the cover (4) and the base (3).

2. A storage box according to claim 1, **characterized in that** the non-peripheral press means of the shape or of at least one of the shapes are arranged in a zone lying between the center of the inside face and one third of the distance to the side edge of the base, or of the cover.

3. A storage box according to claim 1, **characterized in that** three shapes are arranged in a triangle about the center of the inside face of the base or of the cover, the non-peripheral press means of two shapes and the center presenting an angle lying in the range 60° to 150°.

4. A storage box according to claim 1, **characterized in that** the center of the inside face (39) of the base (3) and/or of the bottom face of the cover is disposed between two shapes (43, 44; 53, 61) provided with non-peripheral press means (45, 46; 54, 62).

5. A storage box according to any one of claims 1 to 4, **characterized in that** the or at least one (43, 44) of the shapes of the base (3) presents a lateral press zone (55, 56) pressing against a lateral press zone (25, 26) of the or at least one (27, 28) of the shapes of the cover (4).

6. A storage box according to claim 5, **characterized in that** the or at least one (27, 28) of said shapes is transversely flexible.

7. A storage box according to any one of claims 1 to 6, **characterized in that** the or at least one (53, 61) of the shapes of the base (3) and/or the or at least one of the shapes (27, 28) of the cover (4) is provided so as to act as a support for a rotary work tool (52, 63; 34, 36) of a domestic appliance for preparing food.

8. A storage box according to any one of claims 1 to 7, **characterized in that** the base (3) and the cover (4) form two half-shells.

9. A storage box according to any one of claims 1 to 8, **characterized in that** the cover (4) includes, on the top face (13), an opening (17) enabling a finger to be inserted to actuate a moving and/or resilient part (22) of the cover (4) or of the base (3), said part including fastening means (23) provided to co-operate with holding means (49, 50) of the base (3) or of the cover (4), respectively.

10. A storage box according to claim 9, **characterized in that** the top face (13) of the cover (4) includes two openings (17) disposed on either side of the center of the cover (4), and **in that** two parallel tongue-shaped parts (22), projecting from the inside face (19) of the cover (4), are disposed between the openings (17), the fastening means (23) being formed on the faces of the parts (22) disposed beside the openings (17).
